# NEUE EUROPÄISCHE PATENTSCHRIFT

(11) **EP 2 225 076 B2**
(45) Veröffentlichungstag und Bekanntmachung des Hinweises auf die Entscheidung über den Einspruch: **24.02.2016**
(45) Hinweis auf die Patenterteilung: 13.07.2011
(21) Anmeldenummer: 08862587.6
(22) Anmeldetag: 17.12.2008
(51) Int. Cl.: C08L 97/02, C09J 161/12, C09J 161/24, C09J 161/28, C09J 161/34, C08K 5/17, C08L 61/12, C08L 61/24, C08L 61/28, C08L 61/34

(54) **BINDEMITTEL FÜR WERKSTOFFE AUF HOLZSPAN- UND/ODER HOLZFASERBASIS, VERFAHREN ZUR HERSTELLUNG DESSELBEN UND FORMKÖRPER**
BINDER FOR MATERIALS BASED ON WOOD CHIPS AND/OR WOOD FIBERS, METHOD FOR THE PRODUCTION OF SAID BINDER, AND MOLDED ARTICLE
LIANT POUR MATÉRIAUX À BASE DE COPEAUX ET/OU DE FIBRES DE BOIS, PROCÉDÉ DE FABRICATION DE CE LIANT ET ÉLÉMENT MOULÉ

(30) Priorität: 19.12.2007 DE 102007063430
(43) Veröffentlichungstag der Anmeldung: 08.09.2010
(73) Patentinhaber: Animox GmbH, 12489 Berlin (DE)
(72) Erfinder: VAN HERWIJNEN, Hendrikus W. G., A-3464 Hausleiten-Goldgeben (AT); HEEP, Wolfgang, 15569 Woltersdorf (DE); KRUG, Detlef, 01277 Dresden (DE); WEBER, Andreas, 01737 Tharandt Ot Spechtshausen (DE); HÖHLING, Axel, 13051 Berlin (DE); SCHULTZE, Maria, 15754 Heidesee Ot Friedersdorf (DE)
(74) Vertreter: Gulde & Partner
(86) Internationale Anmeldenummer: PCT/EP2008/067781
(87) Internationale Veröffentlichungsnummer: WO 2009/077571

(56) Entgegenhaltungen:
- EP-A- 1 318 000
- WO-A-2008/026056
- WO-A1-02/062866
- WO-A1-2006/069803
- US-A- 4 282 119
- US-A- 5 506 285
- US-A1- 2005 272 892
- YANG I. ET AL: 'Comparison of protein-based adhesive resins for wood composites' J. WOOD SCI. Bd. 52, 2006, Seiten 503 - 508

## Beschreibung

Die Erfindung betrifft ein Bindemittel zur Herstellung von Werkstoffen auf Holzspan- und/oder Holzfaserbasis, wobei das erfindungsgemäße Bindemittel zur Herstellung und Verklebung von beispielsweise holzstaubartigen, holzspanartigen, holzfurnierartigen, vollholzartigen Werkstoffen und/oder von Werkstoffen auf Faserbasis, wie beispielsweise Holz- und/oder auch Pflanzenfasern, wie z.B. Einjahres- und Mehrjahrespflanzen, eingesetzt wird.

Der so hergestellte Werkstoff ist eine Platte, Matte oder ein Formteil, hergestellt aus Holz- und/oder Faserpartikeln beliebiger Geometrie und Konsistenz, wie beispielsweise eine Spanplatte, eine Sperrholzplatte, eine Massivholzplatte, eine Platte auf Basis von spanartigen Materialien, wie beispielsweise OSB (Oriented Strand Board), Laminated Strand Board (LSL) oder eine Platte auf Basis von Furnieren, wie z.B. LVL (Laminated Veneer Lumber) oder Sperrholz. Andere mögliche Holzwerkstoffe sind Faserplatten, Fasermatten, wie z.B. eine Dämmstofffasermatte, sowie daraus hergestellte Formteile oder Kombinationen der einzelnen Werkstoffe, ohne durch diese Aufzählung aber eine taxative Beschreibung möglicher Einsatzzwecke des erfindungsgemäßen Bindemittels gegeben zu haben.

Bei den zur Herstellung derartiger Werkstoffe momentan eingesetzten Bindemitteln handelt es sich fast ausschließlich um synthetische Bindemittel.

Den mengenmäßig weitaus größten Teil nehmen mit ca. 6 Mio Tonnen/Jahr (gerechnet in flüssiger Lieferform) in Europa die auf Formaldehyd basierenden Kondensationsharze, wie z.B. Harnstoff-Formaldehyd (UF), Melamin-Formaldehyd (MF), Melamin-Harnstoff-Formaldehyd (MUF), Melamin-Harnstoff-Phenol-Formaldehyd (MUPF), Phenol-Formaldehyd (PF), Phenol-Melamin-Formaldehyd (PMF), Phenol-Harnstoff-Formaldehyd (PUF), Resorcin-Phenol-Formaldehyd (RPF), Resorcin-Phenol-Harnstoff-Formaldehyd (RPUF) oder deren Gemische ein.

In deutlich geringerem Umfang werden auch Klebstoffe aus der Gruppe der Polyurethane und sogenannte polymere Diphenylmethandiisocyanate (PMDI), sowie thermoplastische Bindemittel, wie z.B. auf Basis von Polyolefinen, Polyvinylchlorid, thermoplastischen Bindefasern, Polyvinylacetaten oder Polyvinylalkoholen eingesetzt.

Der Vorteil der synthetischen Bindemittel besteht vor allem darin, dass über deren Auswahl zielgerichtet Einfluss auf die Eigenschaften der damit hergestellten Werkstoffe genommen werden und deren Herstellung hocheffektiv gestaltet werden kann sowie eine von den chemischen Grundrohstoffen weitgehende Unempfindlichkeit in den Eigenschaften, insbesondere auch zeitlich bzw. saisonal bedingt, gegeben ist.

Nachteilig anzusehen ist, dass die zur Herstellung der synthetischen Bindemittel benötigten Ausgangsmaterialien letztendlich auf der Erdöl-/Erdgas- oder auch Kohlechemie beruhen. Diese Ressourcen sind limitiert und unterliegen durch die wirtschaftlichen und gesellschaftspolitischen Entwicklungen der letzten Jahre und die weiter fortschreitende Globalisierung in Preis und Verfügbarkeit großen Schwankungen. Der über längere Zeiträume beobachtete Preisanstieg wird sich tendenziell durch den weltweit immer weiter ansteigenden Verbrauch von Öl, Gas und Kohle sowie eine mögliche Ressourcenverknappung weiter fortsetzen.

Der Schonung dieser unwiederbringlich limitierten Ressourcen und der Suche nach Alternativen ist daher aus ökologischer Sicht und in Hinblick auf eine langzeitige nachhaltige Ressourcenwirtschaft oberste Priorität einzuräumen. In den letzten Jahren wurde deshalb versucht, zunehmend wieder natürliche Bindemittel auf tierischer und pflanzlicher Basis zu entwickeln, auf den Markt zu bringen und einzusetzen.

Solche Bindemittel auf natürlicher Basis sind seit dem Altertum bekannt und wurden über Jahrhunderte angewendet. Als Beispiele seien hier Leime und Klebstoffe auf Basis tierischer Bindegewebe, wie Glutinleime, auf Basis von Milcheiweiß, wie Kaseinleime, oder auf Basis wasserlöslicher Proteine, wie Blutalbuminleime, genannt.

Seit vielen Jahren wird auch an verbesserten, alternativen, natürlichen Bindemitteln gearbeitet, wie z.B. auf Basis von polyphenolischen Holzinhaltsstoffen wie Tanninen, Bindemitteln basierend auf unterschiedlichen Ligninvarianten, Bindemitteln auf Basis pflanzlicher Proteine, wie Soja und Weizen, oder auf Stärke- und Zuckerbasis, um nur einige Beispiele zu nennen, ohne eine Vollständigkeit der Aufzählung damit behaupten zu wollen. Zu diesen Aktivitäten besteht ein umfangreiches Schrifttum, wie z.B. M.Dunky und P.Niemz: Holzwerkstoffe und Leime; Technologie und Einflußfaktoren, Springer-Verlag Heidelberg, 2002.

Trotz aller Bemühungen haben die natürlichen Bindemittel weiterhin wesentliche Nachteile, welche insbesondere in den Verarbeitungseigenschaften, technologischen Einsatzparametern, erzielbaren Eigenschaften der daraus hergestellten Werkstoffe wie auch in der gesamten Kostenstruktur begründet sind.

So liegen insbesondere die in der industriellen Plattenherstellung angewandten Presszeiten noch weit über denen bei Einsatz der synthetischen Bindemittel. Ebenso fallen die natürlichen Komponenten mehrheitlich nicht in definierter Zusammensetzung an, was deren Einsatz und die Reproduzierbarkeit der mit diesen Produkten erreichbaren Kennwerte der daraus hergestellten Werkstoffe deutlich erschwert.

Viel mehr erfolgversprechend ist daher die Kombination natürlicher und synthetischer Bindemittel. So werden seit Jahrzehnten Weizen- und Roggenmehle in Leimflotten zur Sperrholzherstellung sowohl als Streckmittel als auch zur Erhöhung der Kaltklebrigkeit der verwendeten Leime eingesetzt.

Als Füllstoffe und Streckmittel für synthetische Leime haben mittlerweile natürliche Bindemittel und Produkte einen festen, aber damit im Einsatz auch limitierten, Platz. Beim Einsatz von solchen Füllstoffen und Streckmitteln auf Basis natürlicher Rohstoffe muss jedoch in der überwiegenden Zahl von Fällen davon ausgegangen werden, dass keine effektive chemische Ein- bzw. Anbindung an das synthetische Bindemittel unter Ausbildung chemischer Hauptvalenzen gegeben ist. Lediglich eine mechanische Fixierung im ausgehärteten Netzwerk des synthetischen Bindemittels oder eine teilweise Anbindung über Nebenvalenzen ist denkbar.

Viel sinnvoller wäre es deshalb, derartige natürliche Bindemittel bzw. Produkte aktiv in die synthetischen Bindemittelsysteme unter Errichtung direkter chemischer Bindungen einzubauen. Dies würde bedeuten, dass die auf Basis natürlicher Rohstoffe eingesetzten Substanzen nicht nur als eher inaktive Füllstoffe und Streckmittel dienen, sondern einen direkten Beitrag als aktives Bindemittel leisten.

Das würde auch wichtige arbeitsmarktpolitische Impulse durch Schaffung weiterer Arbeitsplätze in der Landwirtschaft setzen, Ressourcen schonen und in ökologischer Hinsicht kritisch zu betrachtende Substanzen wie Formaldehyd im Einsatz minimieren.

Emissionen von Formaldehyd aus fertigen Werkstoffen und Produkten, wie sie z.B. weiter oben als verschiedene Holzwerkstoffe beispielhaft aufgezählt worden sind, können aufgrund der hinlänglich bekannten formaldehydbindenden Wirkung von Proteinen auf sehr niedrige Werte reduziert werden. Bekanntlich enthalten einige Naturstoffe wie z.B. Hölzer natürlich entstandenes Formaldehyd, wie in der Fachliteratur ausführlich beschrieben wird (z.B. B.Meyer und C.Böhme, Holz- und Kunststoffverarb. 29 (1994) 1258 - 1259 bzw. Holz Zentr.Bl. 120 (1994) 1969 - 1972 bzw. Holz Roh.Werkst. 53 (1995) 135).

Geeignete Substanzen auf Basis natürlicher nachwachsender Rohstoffe können sehr unterschiedlicher chemischer Natur sein. Tannine und Lignine unterschiedlicher Provenienz basieren auf Grundstrukturen von Phenol bzw. Phenolabkömmlingen; Proteine werden je nach Herkunft aus verschiedenen Aminosäuren aufgebaut, während wiederum andere mögliche Substanzen auf Stärke- und Zucker/Kohlehydratbasis beruhen. Insbesondere Proteine auf Basis pflanzlicher Rohstoffe sind in den letzten Jahren näher untersucht worden und stellen aussichtsreiche Verbindungen für einen gezielten Einsatz und direkten chemischen Einbau in verschiedene synthetische Bindemittel dar. So konnten in den letzten Jahren hierbei wesentliche Verbesserungen durch die Einkondensation von pflanzlichen Proteinkomponenten in z.B. Phenolharze erzielt werden.

Umfangreiche Ergebnisse dieser Arbeiten sind in der EP1318000 beschrieben. Hierbei werden die Aminogruppen der Proteine mit Formaldehyd umgesetzt und mit den Methylolgruppen des Phenolharzes vernetzt.
Neben hierbei erzielten sehr guten Eigenschaftsverbesserungen der zugrundeliegenden synthetischen Bindemittel ist allerdings nach wie vor von Nachteil, dass die bisher eingesetzten Proteinkomponenten auf pflanzlicher Basis aufgrund ihrer relativ hohen Molekulargewichte in flüssiger Form eine wenig geeignete relativ hohe Viskosität von über 600 mPas/20°C aufweisen.

Da die überwiegende Anzahl der Kondensationsharze, hier vor allem die UF-, MUF- und MUPF-Harze, mit einem Harzgehalt von ca. 65 % eingesetzt werden, muss das durch diese natürlichen Komponenten in das Leimsystem eingetragene, überschüssige Wasser mit hohem Zeit- und Energieaufwand wieder entfernt werden, was zusätzlich auch die Einkondensationsmöglichkeiten und die damit erzielbaren Produkteigenschaften der mit diesen Bindemitteln hergestellten Werkstoffe limitiert. Hohe Wasseranteile in eingesetzten Bindemitteln führen zu technologischen Problemen bei der Herstellung verschiedener Werkstoffe, wie z.B. Platten unterschiedlicher Form, durch hohe Dampfbildung und damit eine Instabilität der hergestellten Platten; als weiterer Nachteil ist eine verzögerte chemische Ausbildung aufgrund der Verschiebung der üblicherweise erzielbaren chemischen Gleichgewichte weg von den ausgehärteten Strukturen und hin zu den chemischen Ausgangsstoffen gegeben.

Einem breiteren Einsatz von Substanzen und Stoffen auf Basis natürlicher Rohstoffe zur Herstellung von Bindemitteln, unabhängig ob es sich um ein reines Bindemittel auf Basis dieser natürlichen Rohstoffe oder um Gemische oder Reaktionsgemische mit verschiedenen synthetischen Bindemitteln und Bindemittelkomponenten handelt, stehen nach wie vor verschiedene Probleme und Vorurteile entgegen. Die Herstellkosten für solche natürlichen oder teilweise natürlichen Bindemittel liegen zum Teil noch deutlich über denen der synthetischen Bindemittel, ebenso bestehen hinsichtlich verschiedener Parameter, wie Toxizität und Bioabbaubarkeit noch kontroverse Meinungen. Nach wie vor ist bei vielen Arten natürlicher Bindemittel noch kein zufriedenstellender Technologiestand hinsichtlich der Eigenschaften der Bindemittel sowie der Anwendung und der Eigenschaften der damit hergestellten Produkte erreicht worden. Auch bestehen zum Teil weiterhin große regionale Unterschiede in Gewinnung, Eigenschaften und Anwendung solcher natürlichen Bindemittel. Zudem muss eine kontinuierliche und qualitativ gleichbleibende Versorgung des Marktes mit natürlichen Bindemitteln in einzelnen Fällen noch nachgewiesen werden, insbesondere hinsichtlich geographischer und klimatischer Gegebenheiten oder bestehender Erntebedingungen.
Nachteil bei verschiedenen Bindemitteln oder Bindemittelkomponenten auf Basis natürlicher Rohstoffe ist meist auch die im Vergleich zu den verschiedenen synthetischen Bindemitteln niedrigere Reaktivität aufgrund der niedrigeren Anzahl an reaktiven Stellen im Molekül und der komplexen chemischen Struktur und die damit gegebene langsame Aushärtung; die niedrigere Zahl an reaktiven Gruppen und Reaktionsstellen bewirkt auch einen geringeren Vernetzungsgrad und damit eine niedrigere Vernetzungsdichte; dies kann zu schlechteren mechanischen und physikalischen Eigenschaften führen, wie z.B. zu niedrigeren Festigkeiten.

Aufgabe der Erfindung ist es demnach, ein Bindemittel für die Herstellung und Verklebung von Werkstoffen auf Holzspan- und/oder Holzfaserbasis bereitzustellen, das natürliche Proteinkomponenten enthält und welches die Nachteile des Standes der Technik deutlich verringert oder sogar vermeidet und überdies wirtschaftlich herstellbar und einsetzbar ist.
Das betrifft insbesondere ein Bindemittel, welches hinsichtlich seiner Viskosität in weiten Grenzen variierbar sein sollte, ohne dass der Wassergehalt zu hoch eingestellt werden muss. Darüber hinaus soll die Proteinkomponente im Bindemittel eine hohe Reaktivität aufweisen, um eine hohe Vernetzungsdichte erzielen zu können.

Die Lösung der Aufgabe erfolgt mit einem Bindemittel für Werkstoffe auf Holzspan- und/oder Holzfaserbasis, umfassend ein auf einem Aldehyd basierenden Kondensationsharz und weitere Zusätze, das dadurch gekennzeichnet ist, dass es 5 bis 40 Gew.% eines wasserlöslichen reaktiven Additivs aufweist, das ein Peptid/Aminosäurengemisch ohne Anteile an wasserunlöslichen und hochviskosen Proteinen enthält, wobei das reaktive Additiv herstellbar ist mittels einer Hochdruckthermolyse von proteinhaltigen tierischen Rohstoffen in einem wässrigen Medium, die zweistufig durchgeführt wird, wobei in einer ersten Stufe eine Temperatur 140 bis 190°C und ein Druck von 10 bis 50 bar bei einer Haltezeit von 5 bis 60 min und in einer zweiten Stufe eine Zieltemperatur von 180 bis 230°C und ein Druck von 20 bis 100 bar bei einer Haltezeit von 1 bis 30 min eingestellt wird, wobei die Haltezeit von Stufe zu Stufe abnimmt. Dabei wird unter "ohne Anteile" an wasserlöslichen und hochviskosen Proteinen, wie Kollagen, verstanden "ohne wesentliche Anteile". Ein höherer Anteil dieser Proteine beeinflusst die Wasserlöslichkeit und auch die Viskosität des reaktiven Additivs nachteilig. Unter wasserlöslich wird hier verstanden, dass sich das reaktive Additiv zu mindestens 94% in Wasser mit einer Temperatur von 20°C löst. Überwiegend beträgt die Wasserlöslichkeit sogar fast 100%.

Das Verfahren zur Herstellung des Bindemittels ist dadurch gekennzeichnet, dass ein reaktives Additiv, das hergestellt wird mittels einer Hochdruckthermolyse von proteinhaltigen tierischen Rohstoffen in einem wässrigen Medium, die zweistufig durchgeführt wird, wobei in einer ersten Stufe eine Temperatur 140 bis 190°C und ein Druck von 10 bis 50 bar bei einer Haltezeit von 5 bis 60 min und in einer zweiten Stufe eine Zieltemperatur von 180 bis 230°C und ein Druck von 20 bis 100 bar bei einer Haltezeit von 1 bis 30 min eingestellt wird, wobei die Haltezeit von Stufe zu Stufe abnimmt, in das auf einem Aldehyd basierenden Kondensationsharz während der Harzherstellung chemisch einkondensiert wird und/oder nach der Harzherstellung und/oder unmittelbar vor der Verarbeitung des Bindemittels durch Zumahlen oder Zumischen in flüssiger Phase oder durch sonstige geeignete Mischungsverfahren zugesetzt wird.

Mit dem erfindungsgemäßen Bindemittel sind Formkörper auf Holzspan- und/oder Holzfaserbasis herstellbar.

Vorteilhafte Weiterbildungen des Bindemittels sind in den Unteransprüchen aufgezeigt.

So liegen in einer vorteilhaften Weiterbildung des Bindemittels Peptide und Aminosäuren im Peptid/Aminosäurengemisch im Massenverhältnis von 0,1 : 1 bis 10 : 1 vor.

Eine weitere Ausgestaltung des erfindungsgemäßen Bindemittels ist dadurch gekennzeichnet, dass das reaktive Additiv eine Molekulargewichtsverteilung von etwa 90% der Gesamtmenge zwischen 0,13 und 50 Kilodalton (kDa) bei einem durchschnittlichen Molekulargewicht von 1 bis 20 kDa aufweist.

In einer vorteilhaften Ausgestaltung des Bindemittels weist das reaktive Additiv einen reaktiven Aminostickstoff-Gehalt von 0,7 bis 5% bezogen auf die Trockenmasse auf.

In einer Ausgestaltung des Bindemittels ist das Aldehyd Formaldehyd.

Eine weitere Ausgestaltung des Bindemittels ist dadurch gekennzeichnet, dass das auf Formaldehyd basierende Kondensationsharz bevorzugt aus der Gruppe der Harnstoff-Formaldehyd (UF), Melamin-Formaldehyd (MF), Melamin-Harnstoff-Formaldehyd (MUF), Melamin-Harnstoff-Phenol-Formaldehyd (MUPF), Phenol-Formaldehyd (PF), Phenol-Melamin-Formaldehyd (PMF), Phenol-Harnstoff-Formaldehyd (PUF), Resorcin-Phenol-Formaldehyd (RPF), Resorcin-Phenol-Harnstoff-Formaldehyd (RPUF) und/oder deren Gemische besteht.

Eine erfindungsgemäße Ausgestaltung des Bindemittels ist dadurch gekennzeichnet, dass als weitere Zusätze Hydrophobierungs-, Flammschutz- und/oder Pilzschutzmittel, Bakterizide, Farbstoffe, Pigmente, Geruchshemmer, leitfähigkeitserhöhende Substanzen, viskositätserhöhende Additive sowie Füll- oder Streckmittel enthalten sind.

In einer weiteren Ausgestaltung sind im Bindemittel als weitere Zusätze Thermoplasten wie Polyolefine, Polyvinylchlorid, Bindefasern, Polyvinylacetat und/oder Zusätze auf Basis von Proteinen, Ligninen, Tanninen, Polysacchariden wie Stärke, und/oder Polyurethane sowie polymere Diisocyanate wie polymere Diphenylmethandiisocyanate und Gemische davon enthalten.

Es hat sich vorteilhafterweise gezeigt, dass die eingesetzten reaktiven Additive im Bindemittelherstellungsprozess in das entsprechende Bindemittel aus der Gruppe der auf Basis von Aldehyden, insbesondere Formaldehyd, basierenden Kondensationsharze vorzugsweise einkondensiert werden können. Es ist ein wesentlicher Bestandteil der hier beschriebenen Technologie, dass das reaktive Additiv über seine große Anzahl an reaktiven Gruppen chemisch in das synthetische Bindemittel während dessen Herstellung eingebaut bzw. im Falle der Zugabe des Peptid/Aminosäurengemisches zum fertigen synthetischen Harz und/oder unmittelbar vor der Verarbeitung des synthetischen Harzes während der chemischen Aushärtung des synthetischen Harzes über seine reaktiven Gruppen mit dem synthetischen Harz reagiert und chemisch eingebunden wird.

In einer besonders bevorzugten Ausführungsform sollte der Anteil der enthaltenen Peptide und Aminosäuren mit einem Molekulargewicht von kleiner 10 kDa bei 80% und einer außerordentlich bevorzugten Ausführungsform bei über 90% liegen.
Die Massenanteile aller Bestandteile ergeben in der Summe 100 %.

Das reaktive Additiv ist sowohl als wässrige Lösung als auch in sprühgetrockneter Form einsetzbar.

Die Sprühtrocknung hat den wesentlichen Vorteil, dass das Peptid-/Aminosäurengemisch damit außerordentlich lagerstabil ist. Es kann als unbegrenzt wasserlösliches Pulver sowohl während der Herstellung des synthetischen Kondensationsharzes als auch als pulverförmiges Additiv bei der Vermahlung und/oder sonstigen Aufbereitung fester, auf Aldehyden, wie z.B. Formaldehyd, basierender Kondensationsharze, wie Novolake und feste Resole oder auch im Untermischverfahren mit sprühgetrockneten synthetischen Kondensationsprodukten, wie z.B. UF, MF sowie PF oder auch anderen auf Aldehyden basierenden Kondensationsprodukten eingesetzt werden.

Des Weiteren können ggf. auch dem unter Einsatz des genannten Peptid-/Aminosäurengemisch hergestellten erfindungsgemäßem Bindemittel noch weitere natürliche oder synthetische Komponenten zur Erzielung bestimmter Eigenschaften (z.B. Erhöhung der Kaltklebrigkeit, Viskositätseinstellung etc.) zugegeben werden. Diese Zugabe kann während der Herstellung des erfindungsgemäßen Bindemittels, zum fertig hergestellten erfindungsgemäßen Bindemittel oder auch unmittelbar vor bzw. bei der Verarbeitung des erfindungsgemäßen Bindemittels erfolgen.

Das erfindungsgemäße Bindemittel und die unter Einsatz des erfindungsgemäßen Bindemittels erzielten Eigenschaften der damit hergestellten Werkstoffe werden in den nachstehenden Darstellungen und Ausführungsbeispielen anhand von Abbildungen näher erläutert.

Es zeigen
- Fig. 1: einen Vergleich eines Weizenproteins (WP1) mit dem reaktiven Additiv hinsichtlich ihrer Molekulargewichtsverteilung,
- Fig. 2: einen Vergleich des Protein- bzw. Polypeptidgehaltes von Weizenprotein (WP1) und reaktivem Additiv,
- Fig. 3: eine Darstellung ausgewählter Materialkennwerte von labortechnisch hergestellten HDF (Heizplattentemperatur 220 °C, Presszeitfaktor 15 s/mm),
- Fig. 4: eine Darstellung ausgewählter Materialkennwerte von labortechnisch hergestellten Spanplatten (Heizplattentemperatur 220 °C, Presszeitfaktor 9 s/mm)
und
- Fig. 5: eine Darstellung ausgewählter Materialkennwerte von labortechnisch hergestellten Spanplatten (Heizplattentemperatur 220 °C, Presszeitfaktor 15 s/mm).

Die Vorteile des erfindungsgemäß eingesetzten reaktiven Additivs bestehen insbesondere darin, dass die Rohstoffe viel weiter aufgeschlossen sind und damit die Molekülmasse deutlich niedriger liegt als beispielsweise bei den bekannterweise eingesetzten Weizenproteinen.

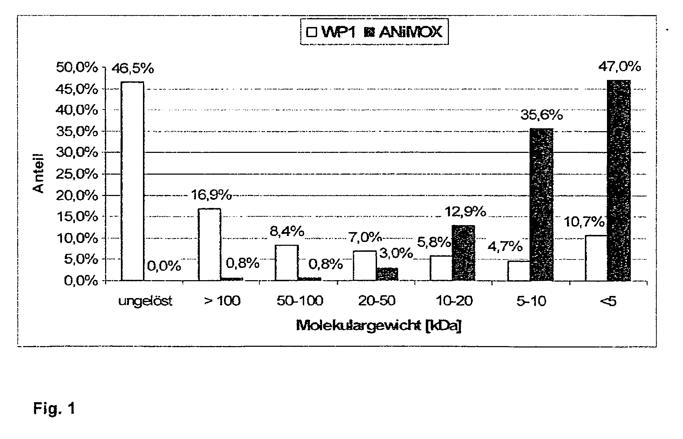

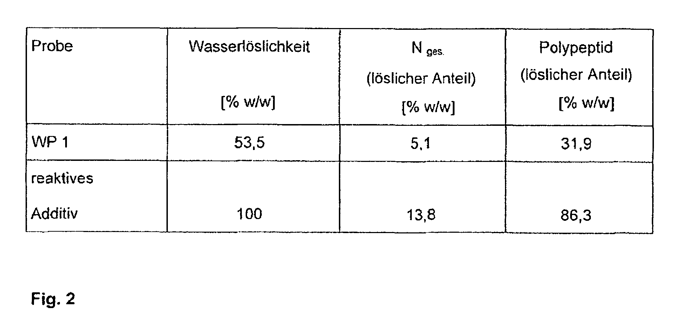

Zum Vergleich ist in Fig. 1 der Peptidgrößenanteil, gemessen mittels Gelpermeationschromatographie (GPC), dargestellt. WP1 steht für Weizenproteinkleber (Gluvital 21000), ein bei der klassischen Stärkeherstellung (Nassverfahren) anfallendes Nebenprodukt mit hohem Wertschöpfungspotential. Dieses Produkt liegt i.d.R. in Pulverform vor und enthält ≈80% (bezogen auf Trockensubstanz) wasserunlösliche Proteine. In alkalischen Medium gelöst, eigneten sich damit formulierte Bindemittel zur Herstellung von Holzwerkstoffplatten mit guter Trockenfestigkeit, Formaldehydabgaben im Bereich nativen Holzes sowie unzureichender Feuchtebeständigkeit der Verklebung. Durch die hohen Wassergehalte in WP1-Bindemittel-Formulierungen waren zudem nur unwirtschaftliche Presszeiten realisierbar (z.B . Krug, D.; Sirch, H.-J: Protein als Kleber; Anteilige PF-Harz-Substitution möglich. Holz-Zent.bl. 125 (1999), S. 773).
Die Molekulargewichtsverteilungen wurden auf einer Pharmacia-Anlage mit einer Säule von 60 cm Länge, 1,6 cm Durchmesser sowie einen Säulenvolumen von 60,3 ml ermittelt. Die Detektion erfolgte bei 280 nm. Als stationäre Phase wurde Säulenmaterial Sephadex G-100 (Trennbereich 1 bis 150 kDA) verwendet. Als mobile Phase kam PBS-Puffer zum Einsatz. Zur Bestimmung der Molekülgrößen wurden als Kalibriersubstanzen Gelchromatographie-Standards der Fa. Biorad eingesetzt. Ebenso unterscheiden sich beide Produkte sehr deutlich sowohl in den löslichen Bestandteilen als auch im Proteingehalt/Polypeptidgehalt (Fig. 2).

Das reaktive Additiv ist sprühgetrocknet wieder zu 100% wasserlöslich, und es wird kein zusätzliches Wasser bei Einsatz sprühgetrockneter Produkte eingetragen.

### Beispiel 1

### Herstellung der Bindemittel

### (i) Synthetisches Ausgangsharz

Phenolharze für die Holzwerkstoffindustrie werden mit einem Überschuss an Formaldehyd zu Phenol - über 1 mol Formaldehyd je mol Phenol - hergestellt. Üblicherweise liegt das Molverhältnis von Phenol zu Formaldehyd um 1 : 2,3 bis 2,4.
Zur Demonstration der Vorzüge des erfindungsgemäßen Bindemittels wurde für die im Beispiel 1 verwendeten Bindemittel ein Molverhältnis von Phenol zu Formaldehyd von jeweils 1 : 2,8 gewählt.
Dabei ist (i) ohne das reaktive Additiv hergestellt.
Vergleichend wurde dann mit (ii) eine Mischung von (i) mit dem reaktiven Additiv geprüft.
In das erfindungsgemäße Bindemittel (iii) wurde das reaktive Additiv während der Herstellung einkondensiert, so dass bezogen auf Festharz des Bindemittels (iii) ca. 22% des reaktiven Additivs fest enthalten sind.
Das synthetische Ausgangsharz (i) und das erfindungsgemäße Bindemittel (iii) charakterisieren sich durch folgende Kennwerte:

| Kennwert | (i) | (iii) |
|---|---|---|
| Viskosität bei 20°C | 110 mPas | 468 mPas |
| Harzgehalt | 55,9 % | 48,6 % |
| pH - Wert | 9,1 | 11,8 |
| Gelierzeit bei 100°C | 21'20" | 28'30" |
| B - Zeit bei 150°C | 47 " | 60" |

### Ergebnisse der Plattenherstellung

### Herstellung von HDF-Platten mit einem PF-Peptid-Bindemittel

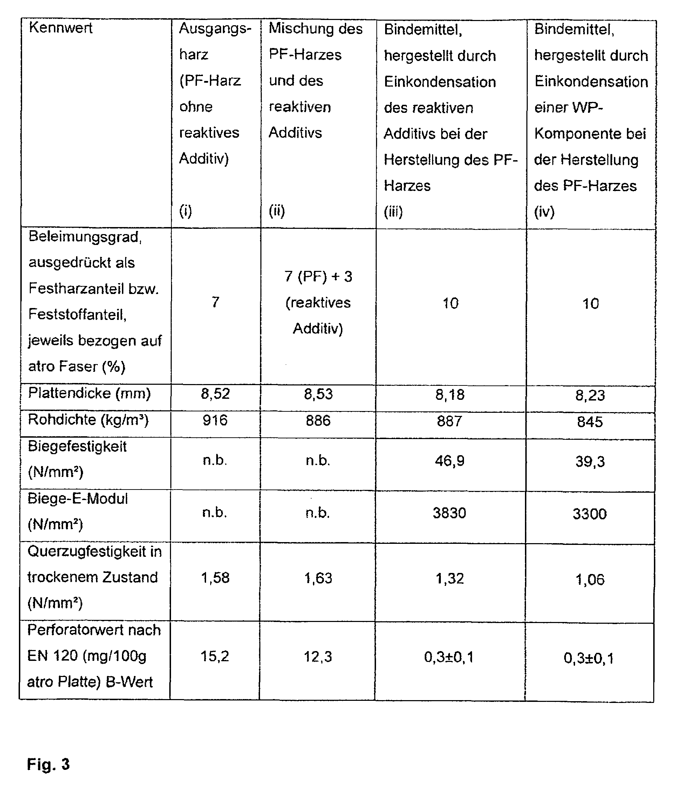

Als Bindemittel wurden (i) ein synthetisches Ausgangsharz, (ii) eine Abmischung des synthetischen Ausgangsharzes mit einem Peptid-/Aminosäurengemisch (reaktives Additiv) sowie (iii) ein Harz verwendet, welches im analogen Molverhältnis wie (i) durch eine Einkondensation des ANiPEPT FF-M hergestellt wurde. Die Vergleichsversuche wurden in vergleichbarer Größenordnung der eingesetzten Bindemittelmenge durchgeführt (Fig. 3).

Es werden, wie am Beispiel ersichtlich, in der erfindungsgemäßen Kombination durchaus vergleichbare mechanische Eigenschaften der so hergestellten Platten erreicht.

Auffällig und überraschend ist ein sehr erfreulicher Nebeneffekt, welcher den weitaus besseren Einbau der natürlichen Strukturen in das Gesamtbindemittel gegenüber dem Stand der Technik ebenso verdeutlicht und dokumentiert.

Im PF-Basisharz wurde wegen des hohen Molverhältnisses ein überdurchschnittlich hoher Perforatorwert ermittelt.

Insbesondere bei der Einkondensation des Peptid-/Aminosäurengemisches (reaktives Additiv) in ein PF-Basisharz gleichem Molverhältnisses Phenol zu Formaldehyd werden die signifikanten Verbesserungen der nachträglichen Formaldehydabgabe durch nahezu vollständigen Einbau des gesamten im Bindemittelsystem vorhandenen Formaldehyds in die gehärtete Harzstruktur deutlich, wodurch das Formaldehydemissionspotential um Größenordnungen gesenkt werden kann.

### Beispiel 2

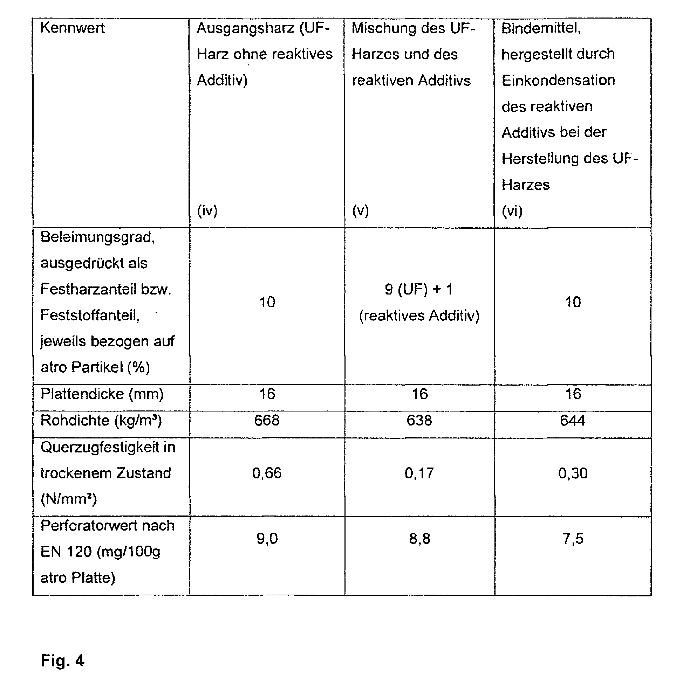

### Herstellung von Spanplatten mit einem UF-Peptid-Bindemittel (Fig. 4)

Als Bindemittel wurden (iv) ein synthetisches UF-Harz mit molverhältinis Harnstoff: zu Formaldehyd von 1 : 1,2 verwendet, sowie (v) eine Abmischung des synthetischen Ausgangsharzes mit einem Peptid-/Aminosäurengemisch (reaktives Additiv) sowie (vi) ein Harz verwendet, welches durch eine Einkondensation des Peptid-/Aminosäurengemisch (reaktives Additiv) in das unter (i) genannte synthetische Ausgangsharz hergestellt wurde.

| Kennwert | (iv) | (v) | (vii) |
|---|---|---|---|
| Viskosität bei 20°C | 277 mPas | 641 mPas | 362 mPas |
| Harzgehalt | 63,9% | 66,6% | 65,2 % |
| pH - Wert | 9,5 | 10,0 | 9,7 |
| Gelierzeit bei 100°C | 37'' | 58'' | 52'' |

Die Vergleichsversuche wurden in vergleichbarer Größenordnung der eingesetzten Bindemittelmenge durchgeführt.

Die Querzugfestigkeiten von mit dem Peptid-/Aminosäurengemisch modifizierten Harzen sind niedriger. Man kann diese verbessern durch schärfere Härtung (stärkere oder mehr Härter) oder durch Änderung der Verfahrensbedingungen (längere Presszeiten und/oder höhere Presstemperaturen).

Wie schon bei den im Beispiel 1 gezeigten Varianten wurde auch im Beispiel 2 die nachträgliche Formaldehydemission der mit dem Ausgangsharz gebundenen Platte insbesondere bei Verwendung des erfindungsgemäßen Bindemittels, welches durch Einkondensation des Peptid-/Aminosäurengemisches (reaktives Additiv) in das Ausgangsharz hergestellt wurde, abgesenkt, dargestellt durch den Vergleich der an diesen Platten nach EN 120 gemessenen Perforatorwerte.

### Beispiel 3 (Vergleichsbeispiel)

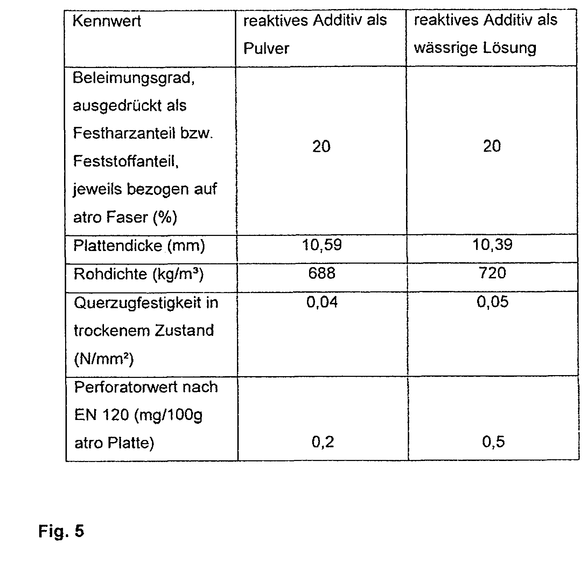

Verwendung des Peptid-/Aminosäurengemischs (reaktives Additiv) ohne synthetische Bindemittelkomponente zur Holzwerkstoffherstellung (Fig. 5)

Ohne synthetische Bindemittelkomponente werden zwar (bei verlängerten Presszeiten, nicht optimiert) prüffähige Platten erhalten, die Festigkeiten sind jedoch nur gering. Bemerkenswert sind die niedrigen Formaldehydgehalte, gemessen als Perforatorwert, die im Bereich des nativen Holzes liegen.

## Patentansprüche

1. Bindemittel für Werkstoffe auf Holzspan- und/oder Holzfaserbasis,
umfassend ein auf einem Aldehyd basierenden Kondensationsharz und weitere Zusätze,
**dadurch gekennzeichnet, dass**
es 5 bis 40 Gew.% eines wasserlöslichen reaktiven Additivs aufweist, das ein Peptid-/Aminosäurengemisch ohne Anteile an wasserunlöslichen und hochviskosen Proteinen enthält, wobei das reaktive Additiv herstellbar ist mittels einer Hochdruckthermolyse von proteinhaltigen tierischen Rohstoffen in einem wässrigen Medium, die zweistufig durchgeführt wird, wobei
in einer ersten Stufe eine Temperatur 140 bis 190°C und ein Druck von 10 bis 50 bar bei einer Haltezeit von 5 bis 60 min und
in einer zweiten Stufe eine Zieltemperatur von 180 bis 230°C und ein Druck von 20 bis 100 bar bei einer Haltezeit von 1 bis 30 min eingestellt wird,
wobei die Haltezeit von Stufe zu Stufe abnimmt.

2. Bindemittel nach Anspruch 1,
**dadurch gekennzeichnet, dass**
Peptide und Aminosäuren im Peptid-/Aminosäurengemisch im Massenverhältnis von 0,1 : 1 bis 10 : 1 vorliegen.

3. Bindemittel nach Anspruch 1 oder 2,
**dadurch gekennzeichnet, dass**
das reaktive Additiv eine Molekulargewichtsverteilung von etwa 90% der Gesamtmenge zwischen 0,13 und 50 Kilodalton (kDa) bei einem durchschnittlichen Molekulargewicht von 1 bis 20 kDa aufweist.

4. Bindemittel nach einem der Ansprüche 1 bis 3,
**dadurch gekennzeichnet, dass**
das reaktive Additiv einen reaktiven Aminostickstoff-Gehalt von 0,7 bis 5% bezogen auf die Trockenmasse aufweist.

5. Bindemittel nach einem der Ansprüche 1 bis 4,
**dadurch gekennzeichnet, dass**
das Aldehyd Formaldehyd ist.

6. Bindemittel nach einem der Ansprüche 1 bis 5,
**dadurch gekennzeichnet, dass**
das auf Formaldehyd basierende Kondensationsharz bevorzugt aus der Gruppe der Harnstoff-Formaldehyd (UF), Melamin-Formaldehyd (MF), Melamin-Harnstoff-Formaldehyd (MUF), Melamin-Harnstoff-Phenol-Formaldehyd (MUPF), Phenol-Formaldehyd (PF), Phenol-Melamin-Formaldehyd (PMF), Phenol-Harnstoff-Formaldehyd (PUF), Resorcinol-Phenol-Formaldehyd (RPF), Resorcinol-Phenol-Harnstoff-Formaldehyd (RPUF) und/oder deren Gemische besteht.

7. Bindemittel nach einem der Ansprüche 1 bis 6,
**dadurch gekennzeichnet, dass**
als weitere Zusätze Hydrophobierungs-, Flammschutz- und/oder Pilzschutzmittel, Bakterizide, Farbstoffe, Pigmente, Geruchshemmer, leitfähigkeitserhöhende Substanze, viskositätserhöhende Additive sowie Füll- oder Streckmittel enthalten sind.

8. Bindemittel nach einem der Ansprüche 1 bis 7,
**dadurch gekennzeichnet, dass**
als weitere Zusätze Thermoplasten, Polyvinylchlorid, Bindefasern, Polyvinylacetat und/oder Zusätze auf Basis von Proteinen, Ligninen, Tanninen, Polysacchariden und/oder Polyurethane sowie polymere Diisocyanate und Gemische davon enthalten sind.

9. Verfahren zur Herstellung des Bindemittels nach Anspruch 1,
**dadurch gekennzeichnet, dass**
ein reaktives Additiv, das hergestellt wird mittels einer Hochdruckthermolyse von proteinhaltigen tierischen Rohstoffen in einem wässrigen Medium, die zweistufig durchgeführt wird, wobei
in einer ersten Stufe eine Temperatur 140 bis 190°C und ein Druck von 10 bis 50 bar bei einer Haltezeit von 5 bis 60 min und
in einer zweiten Stufe eine Zieltemperatur von 180 bis 230°C und ein Druck von 20 bis 100 bar bei einer Haltezeit von 1 bis 30 min eingestellt wird,
wobei die Haltezeit von Stufe zu Stufe abnimmt,
in das auf einem Aldehyd basierenden Kondensationsharz während der Harzherstellung chemisch einkondensiert wird und/oder nach der Harzherstellung und/oder unmittelbar vor der Verarbeitung des Bindemittels durch Zumahlen oder Zumischen in flüssiger Phase oder durch sonstige geeignete Mischungsverfahren zugesetzt wird.

10. Formkörper auf Holzspan- und/oder Holzfaserbasis,
**dadurch gekennzeichnet, dass**
ein Bindemittel gemäß Anspruch 1 enthalten ist.

## Claims

1. A binder for materials based on wood chips and/or wood fibers, comprising an aldehyde-based condensation resin and further additives,
**characterized in that**
it comprises 5 to 40 % by wt. of a water-soluble reactive additive containing a peptide/amino acid mixture without proportions of water-insoluble and highly viscous proteins, wherein the reactive additive can be produced by means of high-pressure thermolysis of proteinaceous animal raw materials in an aqueous medium which is performed in two stages, wherein
in a first stage a temperature of 140 to 190 °C and a pressure of 10 to 50 bar is adjusted at a hold time of 5 to 60 min and
in a second stage a target temperature of 180 to 230 °C and a pressure of 20 to 100 bar is adjusted at a hold time of 1 to 30 min,
wherein the hold time decreases from stage to stage.

2. The binder according to claim 1,
**characterized in that**
peptides and amino acids in the peptide/amino acid mixture are present in a mass ratio of from 0.1 : 1 to 10 : 1.

3. The binder according to claim 1 or 2,
**characterized in that**
the reactive additive has a molecular weight distribution of about 90 % of the total amount between 0.13 and 50 kilodaltons (kDa) at an average molecular weight of 1 to 20 kDa.

4. The binder according to one of claims 1 to 3,
**characterized in that**
the reactive additive has a reactive amino nitrogen content of 0.7 to 5%, based on the dry mass.

5. The binder according to one of claims 1 to 4,
**characterized in that**
the aldehyde is formaldehyde.

6. The binder according to one of claims 1 to 5,
**characterized in that**
the formaldehyde-based condensation resin preferably consists of the group of urea-formaldehyde (UF), melamine-formaldehyde (MF), melamine-urea-formaldehyde (MUF), melamine-urea-phenol-formaldehyde (MUPF), phenol-formaldehyde (PF), phenol-melamine-formaldehyde (PMF), phenol-urea-formaldehyde (PUF), resorcinol-phenol-formaldehyde (RPF), resorcinol-phenol-urea-formaldehyde (RPUF) and/or mixtures thereof.

7. The binder according to one of claims 1 to 6,
**characterized in that**
hydrophobizing agents, flame retardants and/or fungicides, bactericides, dyes, pigments, odor inhibitors, conductivity-increasing substances, viscosity-increasing additives, as well as fillers or extenders are contained as further additives.

8. The binder according to one of claims 1 to 7,
**characterized in that**
thermoplastics, polyvinyl chloride, bonding fibers, polyvinyl acetate and/or additives based on proteins, lignins, tannins, polysaccharides and/or polyurethanes as well as polymeric diisocyanates and mixtures thereof are included as further additives.

9. A method for producing the binder according to claim 1, **characterized in that**
a reactive additive can be produced by means of high-pressure thermolysis of proteinaceous animal raw materials in an aqueous medium, which is performed in two stages, wherein
in a first stage a temperature of 140 to 190 °C and a pressure of 10 to 50 bar is adjusted at a hold time of 5 to 60 min, and
in a second stage a target temperature of 180 to 230 °C and a pressure of 20 to 100 bar is adjusted at a hold time of from 1 to 30 min, said hold time decreasing from stage to stage,
is incorporated in the aldehyde-based condensation resin by chemical condensation during resin production and/or added following resin production and/or immediately prior to processing the binder by grinding or mixing in liquid phase or by means of other suitable mixing procedures.

10. A molded article based on wood chips and/or wood fibers,
**characterized in that**
a binder in accordance with claim 1 is contained.

## Revendications

1. Agent liant pour des matériaux à base de copeau de bois et/ou de fibre de bois,
comprenant une résine de condensation à base d'un aldéhyde et d'autres adjuvants,
**caractérisé en ce**
**qu'**il comprend de 5 à 40% en poids d'un additif réactif soluble dans l'eau, qui contient un mélange de peptides/acides aminés ne comportant aucune part de protéines insolubles dans l'eau et à haute viscosité, l'additif réactif pouvant être préparé au moyen d'une thermolyse à haute pression de matières premières animales protéiques dans un milieu aqueux, qui est réalisée en deux étapes,
dans une première étape étant réglées une température de 140 à 190 °C et une pression de 10 à 50 bar, pour un temps de maintien de 5 à 60 minutes et dans une deuxième étape étant réglées une température cible de 180 à 230 °C et une pression de 20 à 100 bar pour un temps de maintien de 1 à 30 minutes,
le temps de maintien étant décroissant d'étape en étape.

2. Agent liant selon la revendication 1,
**caractérisé en ce que**
les peptides et les acides aminés dans le mélange peptides/acides aminés sont contenus dans un rapport de masse de 0,1 : 1 à 10 : 1.

3. Agent liant selon la revendication 1 ou 2,
**caractérisé en ce que**
l'additif réactif a une distribution de poids moléculaire pour environ 90 % de la quantité totale dans une plage comprise entre 0,13 et 50 kilodaltons (kDa), avec un poids moléculaire moyen de 1 à 20 kDa.

4. Agent liant selon l'une quelconque des revendications 1 à 3,
**caractérisé en ce que**
l'additif réactif a une teneur en azote aminé réactif de 0,7 à 5 % rapportée à la masse sèche.

5. Agent liant selon l'une quelconque des revendications 1 à 4,
**caractérisé en ce que**
l'aldéhyde est du formaldéhyde

6. Agent liant selon l'une quelconque des revendications 1 à 5,
**caractérisé en ce que** la résine de condensation à base de formaldéhyde est choisie de préférence dans le groupe comprenant l'urée-formaldéhyde (UF), le mélamine-formaldéhyde (MF), le mélamine-urée-formaldéhyde (MUF), le mélamine-urée-phénol-formaldéhyde (MUPF), le phénol-formaldéhyde (PF), le phénol-mélamine-formaldéhyde (PMF), le phénol-urée-formaldéhyde (PUF), le résorcinol-phénol-formaldéhyde (RPF), le résorcinol-phénol-urée-formaldéhyde (RPUF) et/ou des mélanges de celles-ci.

7. Agent liant selon l'une quelconque des revendications 1 à 6
**caractérisé en ce qu'**il contient, en tant qu'autres adjuvants, des agents imperméabilisants, des agents ignifugeants et/ou des fongicides, des bactéricides, des colorants, des pigments, des inhibiteurs d'odeur, des substances augmentant la conductivité, des substances augmentant la viscosité, ainsi que des matières de charge ou des extendeurs.

8. Agent liant selon l'une quelconque des revendications 1 à 7,
**caractérisé en ce**
**qu'**il contient, en tant qu'autres adjuvants, des thermoplastiques, du chlorure de polyvinyle, des fibres liantes, du polyvinylacétate et/ou des additifs à base de protéines, de lignines, de tannins, de polysaccharides et/ou des polyuréthanes ainsi que des diisocyanates polymères et des mélanges de celles-ci.

9. Procédé de fabrication de l'agent liant selon la revendication 1,
**caractérisé en ce que**
un additif réactif qui est produit au moyen d'un thermolyse sous haute pression de matières premières animales protéiques dans un milieu aqueux, qui est réalisée en deux étapes,
dans une première étape étant réglées une température de 140 à 190 °C et une pression de 10 à 50 bar, pour un temps de maintien de 5 à 60 minutes et dans une deuxième étape étant réglées une température cible de 180 à 230 °C et une pression de 20 à 100 bar pour un temps de maintien de 1 à 30 minutes,
le temps de maintien étant décroissant d'étape en étape est introduit et condensé chimiquement dans la résine de condensation à base d'un aldéhyde pendant la préparation de la résine et/ou est ajouté après la préparation de la résine et/ou immédiatement avant la transformation de l'agent liant par ajout du produit broyé ou mélange en phase liquide ou par divers procédés de mélange appropriés.

10. Corps moulé à base de copeau de bois ou de fibre de bois,
**caractérisé en ce**
**qu'**il contient un agent liant selon la revendication 1.
